# EUROPEAN PATENT APPLICATION

(11) **EP 2 390 228 A1**
(43) Date of publication of application: **30.11.2011**
(21) Application number: 10733565.5
(22) Date of filing: 22.01.2010
(51) Int. Cl.: C01B 33/26, B01J 20/08, B01J 20/10, B01J 20/18, B09B 3/00, C01B 39/14, C01B 39/22, C01F 7/00

(54) **HYDRO COMPOSITE WITH IRON AND STEEL SLAG AS STARTING MATERIAL, AND MANUFACTURING METHOD THEREFOR**

(30) Priority: 23.01.2009 JP 2009013406
(71) Applicant: Akita University, Akita-shi Akita 010-8502 (JP)
(72) Inventor: WAJIMA, Takaaki, Akita-shi Akita 010-8502 (JP); SUGAWARA, Katsuyasu, Akita-shi Akita 010-8502 (JP)
(74) Representative: Selden, Deborah Anne
(86) International application number: PCT/JP2010/050817
(87) International publication number: WO 2010/084958

(57) **Abstract**

The present invention provides a novel method capable of producing hydrocomposites through the effective utilization of all of the components contained in iron and steel slag, while reducing the amount of slag waste. The invention also provides hydrocomposites obtained by the method. The production method comprises: a mixture producing step of adding solid base to an iron and steel slag-containing starting material and mixing them to produce a mixture; a molten chips producing step of melting the mixture obtained in the mixture producing step at a temperature within the range of 100-1000 °C to produce molten chips; and a hydrocomposite producing step of adding the molten chips obtained in the molten chips producing step to a solvent to produce a solution and then producing a hydrocomposite from the solution.

## Description

### Technical Field

The present invention relates to a method for producing valuable hydrocomposites from iron and steel slag.

### Background Art

In response to the growing global demand, the production volume of steel has been increasing every year. In the production process of steel, iron and steel slag such as blast furnace slag and steel slag is produced as a by-product. Although iron and steel slag has been used as a resource for a wide range of applications such as road-paving material, concrete additives, and soil conditioner, in order to completely process the iron and steel slag of which the amount is increasing every year, it is necessary to develop new usages.

The iron and steel slag includes many components such as oxide of e.g. Ca, Si, Al, Fe, and Mg. It is assumed that various functional substances can be produced by controlling these components. Examples of the functional substances obtained from the above components include: composite oxides such as zeolite, hydrogarnet, and hydrocalumite; hydroxide; and carbonate. These can be suitably used as, for example, ion-exchange materials, immobilizing materials for refractory substances, and absorbents. These functional substances can be produced by various methods (for example, see Patent documents 1 to 4.); there is a possibility for synthesis and production of these using iron and steel slag as a starting material (this may be referred to as "raw material"). However, there are few examples of actually attempting synthesis of the above functional substances with iron and steel slag. Therefore, in this situation, processing of the increasing iron and steel slag cannot catch up with its production. This is because it has been presumably thought that solubility and reactivity, for example, of the above components contained in the iron and steel slag are different per component, in view of necessary removal of some components and addition of other components, it is quite wasteful to use the iron and steel slag as the starting material.

For example, Patent documents 5 and 6 propose methods for producing zeolite A with iron and steel slag as a starting material. The methods include the steps of: preparing the components in the iron and steel slag into a predetermined composition; dissolving the composition in an alkaline solution; and carrying out hydrothermal treatment.

### Citation List

### Patent Literature

Patent Document 1: Japanese Patent Application Laid-Open (JP-A) No. 2001-220128
Patent Document 2: JP-A No. 2007-191385
Patent Document 3: JP-A No. 2001-058814
Patent Document 4: JP-A No. 2007-131502
Patent Document 5: JP-A No. 2007-222713
Patent Document 6: JP-A No. 2005-239459

### Disclosure of the Invention

### Problems to be solved by the Invention

Patent documents 1 to 4 do not specifically study iron and steel slag as a starting material. In addition, in Patent document 5, to obtain zeolite A from iron and steel slag, an iron and steel slag is processed by acid treatment in advance for removing Ca and Mg to adjust the composition. Then, the acid-treated iron and steel slag is dissolved in an alkaline solution and the dissolved components only are hydrothermally treated. Accordingly, this method requires the step of removing Ca and Mg components before the synthesis reaction, which makes the process complicated; moreover, it is necessary to add other components to supplement components poorly-soluble in the solution. Patent document 6 also discloses a method including the steps of: adjusting the composition of the iron and steel slag in advance; then carrying out hydrothermal treatment for components only dissolved in the alkaline solution. This method requires addition of deficient components before the synthesis reaction and removal of excess components, which make the process complicated. In other words, in the conventional technique for synthesizing functional substances from iron and steel slag, there is no idea to effectively utilize the entirety of the components of the iron and steel slag.

Accordingly, an object of the present invention is to provide a novel method for producing functional substances (particularly hydrocomposites) from iron and steel slag, which simplifies the process and which provides a new recycling idea for iron and steel slag with a mode which is capable of effectively utilizing the entire slag including the poorly-soluble portion as well as the readily-soluble portion of the components.
Another object of the invention is to provide a characteristic hydrocomposite obtained by the method.

### Means for Solving the Problems

As a result of intensive study by the inventors, they discovered that the entire iron and steel slag is readily-dissolved and powderized, which provides a favorable mode to effectively use the entire components contained in the slag when producing hydrocomposites by carrying out alkaline treatment (alkaline melting treatment) for iron and steel slag and discovered that the obtained hydrocomposites are characteristic ones. Then, they completed the present invention.

The first aspect of the present invention solves the above problems by providing a hydrocomposite produced from an iron and steel slag, which comprises hydrogarnet and calcite, a ratio (α₁/β₁) of the strength in X-ray diffraction (α₁) of the (420) crystal face of the hydrogarnet to the strength in X-ray diffraction (β₁) of the (104) crystal face of the calcite respectively obtained by X-ray diffraction measurement being 0.05-200.

In the first and the following aspects of the invention, the term "X-ray diffraction measurement" means a powder X-ray diffraction measurement employing CuKα (wavelength 0.154 nm) as a radiation source. The term "(420) crystal face of the hydrogarnet" means, in the above powder X-ray diffraction measurement, a crystal face related to diffraction peak(s) at around 32-33°. The term" (104) crystal face of the calcite" means, in the above powder X-ray diffraction measurement, a crystal face related to diffraction peak (s) at around 29-30°. In the present invention, "RAD-C" manufactured by Rigaku Corporation is used as the X-ray diffraction measurement equipment; then, the powder X-ray diffraction measurement is carried out in accordance with a step operation method (Angle range: 2θ = 5-50°, Step width: 0.2°, Holding time: 300 seconds) to obtain data related to the diffraction peak.

In the first aspect of the invention, the ratio (α₁/β₁) is preferably 0.05-10. Particularly, it is preferably 0.1-9.5, more preferably 0.3-4. Within the above ranges, hydrogarnet can be easily obtained from iron and steel slag.

The second aspect of the invention solves the above problems by providing a hydrocomposite produced from an iron and steel slag, which comprises hydrocalumite and calcite, the ratio (α₂/β₂) of the strength in X-ray diffraction (α₂) of the (102) crystal face of the hydrocalumite to the strength in X-ray diffraction (β₂) of the (104) crystal face of the calcite respectively obtained by X-ray diffraction measurement being 0.05-200.

In the second aspect of the invention, the term "hydrocalumite" means a concept including calcium-based hydrocalumite itself and magnesium-based hydrotalcite having a crystal structure equivalent to that of hydrocalumite. The term "(102) crystal face of the hydrocalumite" means, in the above X-ray diffraction measurement, a crystal face related to diffraction peak(s) at around 11-12°.

In the second aspect of the invention, the ratio (α₂/β₂) is preferably 0.05-10. Particularly, it is preferably 0.1-6, more preferably 0.2-3. Within the above ranges, hydrocalumite can be easily obtained from iron and steel slag.

The third aspect of the invention solves the above problems by providing a hydrocomposite produced from an iron and steel slag, which comprises at least: zeolite X, zeolite A, calcite, and hydroxysodalite.

In the third aspect of the invention, the ratio (α₃/β₃) of the strength in X-ray diffraction (α₃) of the (111) crystal face of the zeolite X to the strength in X-ray diffraction (β₃) of the (104) crystal face of the calcite; the ratio (α₄/β₃) of the strength in X-ray diffraction (α₄) of the (200) crystal face of the zeolite A to the strength in X-ray diffraction (β₃) of the (104) crystal face of the calcite; or the ratio (α₅/β₃) of the strength in X-ray diffraction (α₅) of the (211) crystal face of the hydroxysodalite to the strength in X-ray diffraction (β₃) of the (104) crystal face of the calcite, respectively obtained by X-ray diffraction measurement, is preferably 0.5-200.

In the third aspect of the invention, the term"(111) crystal face of the zeolite X" means, in the above powder X-ray diffraction measurement, a crystal face related to diffraction peak(s) at around 6-7°. The term "(200) crystal face of the zeolite A" means, in the above powder X-ray diffraction measurement, a crystal face related to diffraction peak(s) at around 7-8°. The term" (211) crystal face of the hydroxysodalite" means, in the above powder X-ray diffraction measurement, a crystal face related to diffraction peak(s) at around 24-25°.

In the third aspect of the invention, the ratio (α₃/β₃, α₄/β₃, or α₅/β₃) is preferably 0.5-1.

The first to third aspects of the present invention are preferably produced from the entirety of the components contained in the iron and steel slag.

The fourth aspect of the present invention solves the above problems by providing a method for producing hydrocomposite, which comprises: a mixture producing step of adding solid base to an iron and steel slag-containing starting material and mixing them to produce a mixture; a molten chips producing step of melting the mixture obtained in the mixture producing step at a temperature within the range of 100-1000 °C to produce molten chips; a hydrocomposite producing step of adding the molten chips obtained in the molten chips producing step to a solvent to produce a solution and then producing a hydrocomposite from the solution.

In the fourth aspect of the invention, the starting material to be mixed with the solid base may contain 20-80 mass % of calcium component equivalent to CaO. In the invention, even if the starting material contains a large amount of components such as components conventionally removed and components poorly-soluble in the solution, it is possible to readily dissolve these components. Accordingly, as the method also enables the effective use of calcium components, it is possible to produce various hydrocomposites. In general, iron and steel slag contains a large amount of calcium components, the invention can use the iron and steel slag only itself as the starting material without removing the calcium components or adding other components.

In the mixture producing step of the fourth aspect of the invention, 40-200 parts by mass of the solid base is preferably added and mixed to 100 parts by mass of the starting material. By setting the ratio of the starting material and the solid base as above, in the molten chips producing step, the molten chips can be readily dissolved and powderized, effectively.

Moreover, in the fourth aspect of the invention, the solid base is preferably sodium hydroxide or lithium hydroxide, which enables the production cost to be lowered, enables the melting treatment to be carried out easily, and enables a suitable form of the molten chips to be obtained.

Further, in the hydrocomposite producing step of the fourth aspect of the invention, the solution in which the molten chips are dissolved may be aged for 3 hours or more to obtain hydrocalumite. In the invention, since the poorly-soluble components in the iron and steel slag-containing components is made readily-soluble and dissolved in the solution, it is possible to cause reaction in the solution by only aging the solution; thereby it is possible to obtain hydrocalumite easily.

Still further, in the hydrocomposite producing step of the fourth aspect of the invention, the solution in which the molten chips are dissolved may be heated at a temperature within the range of 80-200 °C to obtain hydrogarnet. In the invention, since the poorly-soluble components in the iron and steel slag-containing components are made readily-soluble and dissolved in the solution, it is possible to obtain hydrogarnet easily by only heating the solution, without adding other components.

Still further, in the hydrocomposite producing step of the fourth aspect of the invention, a chelator may be added to the solution in which the molten chips are dissolved and then the mixture is heated at a temperature within the range of 20-200 °C to obtain zeolite. With the formation of molten chips, the components which are conventionally treated as poorly-soluble components can be ionized. So, the chelator can adequately function and easily trap a particular components compared with the case of removing the components from solids or gases; thereby it is possible to obtain zeolite easily. In addition, the components trapped by the chelator can be collected easily by adjusting the pH.

Still further, in the fourth aspect of the invention to obtain zeolite in the hydrocomposite producing step, the chelator is preferably ethylenediamine tetraacetate (EDTA). This is because zeolite can be produced more easily by trapping the calcium components.

### Effects of the Invention

With the production method of the present invention, by alkaline melting treatment of iron and steel slag to form molten chips, the iron and steel slag can be made readily-soluble and be powderized and the entire iron and steel slag-containing components can be used when producing the hydrocomposites; thereby it is possible to produce hydrocomposites such as zeolite and hydrogarnet with easy processes. Moreover, since a solid base is used, the solution can be made alkaline without adding thereto other components and the hydrocomposite can be produced with simplified processes. Further, by recycling the whole slag, the method can contribute to a recycling-intensive society with zero emissions. Still further, with the production method of the invention, characteristic hydrocomposites having functions such as ion-exchange property can be obtained; so, the iron and steel slag can be effectively used.

### Brief Description of the Drawings

Fig. 1 is a schematic view showing a production method of the present invention;
Figs. 2A and 2B are results of X-ray diffraction analysis relating to products obtained from iron and steel slag;
Figs. 3A and 3B are results of X-ray diffraction analysis relating to products obtained from iron and steel slag;
Figs. 4A, 4B, and 4C are results of X-ray diffraction analysis relating to products obtained from iron and steel slag;
Figs. 5A, 5B, and 5C are results of X-ray diffraction analysis relating to products obtained from iron and steel slag;
Figs. 6A, 6B, and 6C are results of X-ray diffraction analysis relating to products obtained from iron and steel slag;
Figs. 7A, 7B, and 7C are results of X-ray diffraction analysis relating to products obtained from iron and steel slag;
Figs. 8A, 8B, and 8C are results of X-ray diffraction analysis relating to products obtained from iron and steel slag;
Figs. 9A, 9B, and 9C are results of X-ray diffraction analysis relating to products obtained from iron and steel slag;
Figs. 10A, 10B, and 10C are results of X-ray diffraction analysis relating to products obtained from iron and steel slag;
Figs. 11A, 11B, and 11C are results of X-ray diffraction analysis relating to products obtained from iron and steel slag;
Figs. 12A, 12B, and 12C are results of X-ray diffraction analysis relating to products obtained from iron and steel slag;
Figs. 13A, 13B, and 13C are results of X-ray diffraction analysis relating to products obtained from iron and steel slag;
Figs. 14A and 14B are results of X-ray diffraction analysis relating to products obtained from iron and steel slag;
Figs. 15A, 15B, and 15C are results of X-ray diffraction analysis relating to products obtained from iron and steel slag;
Figs. 16A, 16B, and 16C are results of X-ray diffraction analysis relating to products obtained from iron and steel slag;
Figs. 17A, 17B, and 17C are results of X-ray diffraction analysis relating to products and so on obtained from iron and steel slag and the SEM images thereof;
Figs. 18A, 18B, and 18C are results of X-ray diffraction analysis relating to products and so on obtained from iron and steel slag and the SEM images thereof;
Figs. 19A, 19B, and 19C are results of X-ray diffraction analysis relating to products and so on obtained from iron and steel slag and the SEM images thereof;
Figs. 20A and 20B are graphs showing results comparing anion adsorption performance of iron and steel slag itself and hydrocalumite obtained from the iron and steel slag;
Figs. 21A and 21B are graphs showing results comparing anion adsorption performance of iron and steel slag itself and
hydrocalumite obtained from the iron and steel slag; and
Fig. 22 is a graph showing evaluation results of anion adsorption performance of reagent for hydrocalumite.

### Best Mode for Carrying Out the Invention

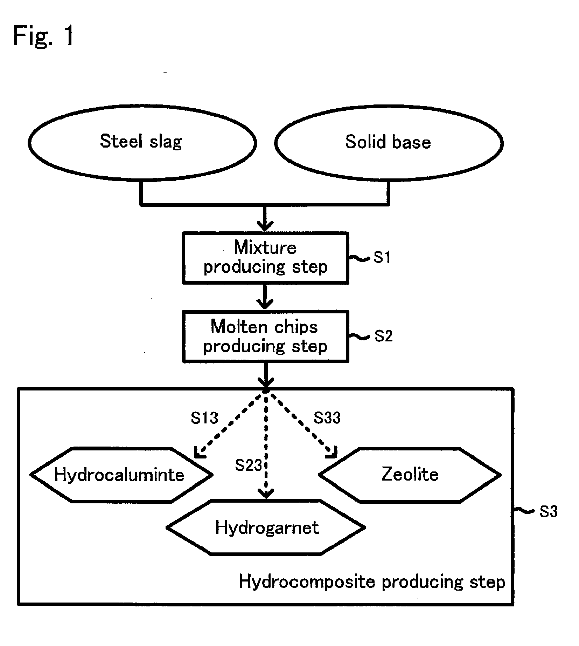

Fig. 1 is a schematic view showing a production method of the first embodiment of the present invention. As shown in Fig. 1, the method of the first embodiment comprising: a mixture producing step S1 of adding solid base to an iron and steel slag-containing starting material and mixing them to produce a mixture; a molten chips producing step S2 of melting the mixture to obtain molten chips; and a hydrocomposite producing step S3 of dissolving the obtained molten chips in a solvent (solution) to obtain hydrocomposites. The hydrocomposite producing step S3 comprises: a step for obtaining hydrocalumite S13 by aging the solution in which the molten chips are dissolved; a step for obtaining hydrogarnet S23 by heating the solution in which the molten chips are dissolved; or a step for obtaining zeolite S33 by adding a chelator to the solution in which the molten chips are dissolved and heating the mixture. Each of the materials to be used in the embodiment and steps of the production process will be described as follows.

### < Starting material (Iron and steel slag) >

In this embodiment of the invention, a material including iron and steel slag is used as a starting material (it may also be called "raw material") for the molten chips. In the raw material, iron and steel slag is preferably the main component. The term "main component" in this context means a component accounting for 80 mass % or more based on the total mass of the raw material. The raw material may consist of the iron and steel slag only. The raw material may also contain components other than iron and steel slag.

With respect to the iron and steel slag, an iron and steel slag which is produced in a steel production process may be used without any limitation: such as blast furnace slag obtained by separating and recovering components of iron ore melted in the blast furnace for producing pig iron, together with ash portion in limestone and coke as auxiliary material; and steel slag produced in the steel-making process to process molten iron in the blast furnace into steel. The iron and steel slag has various compositions depending on the types of slag; it contains components such as: lime (CaO), silica (Si0₂), and alumina (Al₂O₃); but also sulfur compounds(S, etc.), phosphorus compounds (P₂0₅, etc.), manganese compounds (MnO), magnesia (MgO), and T-Fe (Total Fe: FeO and Fe). Particularly, the proportion of CaO is large. In this embodiment of the invention, to utilize the above contained components as a whole, the iron and steel slag is mixed with the below-described solid base to make it readily-soluble and to be powderized. It should be noted that so as to accelerate the reaction, specific surface of the iron and steel slag may be enlarged by pulverization and so on. For pulverization, conventional equipment for pulverization such as a pulverizer or a ball mill can be used without any limitation. To adjust the composition of the iron and steel slag, other components may be added or contained components may be removed. However, since this embodiment of the invention can effectively utilize the whole components contained in the iron and steel slag, it is therefore possible to produce hydrocomposites without adding other components. That is, in this embodiment of the invention, although an iron and steel slag in which a particular component is removed or added to may be mixed with the solid base to produce the below-described molten chips in a conventional manner, it is also possible to produce molten chips by mixing the iron and steel slag only with the solid base. It should be noted that by combining: a conventional step of removing a particular component from the iron and steel slag or adding a particular component to the iron and steel slag; and the production method of the present invention, hydrocomposites can be produced more efficiently. As the starting material to be mixed with the solid base, a material containing 20-80 mass % of CaO based on the total mass of the starting material may be acceptable.

### < Solid base >

Any solid base can be used without any limitation as long as it is a substance which can suitably carry out alkaline melting treatment for iron and steel slag to make the iron and steel slag readily-soluble. Specific examples of the solid base include: preferably alkali metal hydroxide such as sodium hydroxide and alkali metal carbonate such as sodium carbonate; more preferably alkali metal hydroxide; and particularly preferably sodium hydroxide. In view of uniformly mixing the solid base in the iron and steel slag, the solid base is preferably sufficiently finely pulverized and mixed, then, heated at a temperature within the range of 200-600 °C with melting treatment. The method of pulverizing and mixing the solid base may be known methods without any limitation.

### < Molten chips >

The molten chips are a powdery solid produced by the steps of: mixing a starting material containing the above iron and steel slag with a solid base; pulverizing the mixture; and processing by melting treatment. The molten chips are produced by adding a solid base at an amount of preferably 40-200 parts by mass, more preferably 80-200 parts by mass, and particularly preferably 120-160 parts by mass based on 100 parts by mass of the above iron and steel slag (starting material). By setting the proportion of the starting material and the solid base, it is possible to obtain sufficiently readily-soluble molten chips; thereby it is possible to obtain the molten chips without causing unintended side reactions.

### < Hydrocomposite >

When dissolving the molten chips in a solvent (solution), various functional substances can be obtained from the solution. The hydrocomposite thus obtained in accordance with the production method of this embodiment of the invention contains hydrocalumite, hydrogarnet, or zeolite. These are made from components derived from the iron and steel slag; so, it is different from the conventional ones in that the iron and steel slag as a whole is utilized. Specific conditions and the like for synthesizing each hydrocomposite will be described as follows.

### < Method for producing hydrocomposite >

Hereinafter, each step of the method for producing the hydrocomposite of this embodiment of the invention will be described in detail.

### (Mixture producing step S1)

In the mixture producing step S1, a solid base and a material containing the above iron and steel slag are mixed at a predetermined proportion to produce a mixture. The iron and steel slag is preferably pulverized. The mixing method is not particularly limited as long as it is capable of mixing a solid with other solids. The mixture is kneaded by, for example, a ball mill to be additionally finely pulverized and then supplied to the molten chips producing step.

### (Molten chips producing step S2)

In the molten chips producing step S2, the mixture obtained in the above step S1 is processed by melting treatment to produce powdery molten chips. The pressure of the melting treatment is not specifically limited. The temperature of the melting treatment is not specifically limited either, as long as the temperature is sufficient for the melting treatment. In view of shortening the reaction time and inhibiting side reaction, the temperature is within the range of 100-1000 °C, preferably 200-800 °C, more preferably 500-700 °C, and further more preferably 600 °C. It should be noted that by adequately changing the heating time and heating temperature in the melting treatment, the composition and yield of the hydrocomposites obtained in the below-described hydrocomposite producing step S3 can be changed. After the melting treatment, by cooling the heated mixture, powdery molten chips in which components contained in the iron and steel slag have been made readily-soluble can be obtained.

### (Hydrocomposite producing step S3)

In the hydrocomposite producing step S3, the molten chips obtained in the above step S2 are dissolved in a solvent (solution) until the entirety of the components derived from the iron and steel slag are dissolved; then, the hydrocomposite is obtained. The solvent (solution) for dissolving the molten chips is not particularly limited as long as it can adequately dissolve the molten chips; water is preferably used. Water includes: not only distilled water and deionized water; but also highly adulterated water such as industrial water, sea water, river water, and hot-spring water. The specific production process of each hydrocomposite in the step S3 (steps S13, S23, and S33) will be described as follows.

### (Step S13)

When synthesizing the hydrocomposite, by aging the solution in which the molten chips are dissolved for 3 hours or more, preferable24-48 hours, hydrocalumite can be obtained. The concentration of the solution is not specifically limited; the molten chips are preferably contained at an amount of about 1-3 g to 10 mL solvent. In this embodiment of the invention, since the iron and steel slag component is made readily-soluble and dissolved in the solution, it is possible to obtain the hydrocalumite easily by only aging the solution without adding any other components; thus, the process can be simplified. In addition, since the solution is made alkaline by the solid base contained in the molten chips, it is capable of adequately adjusting the pH of the solution without adding other basic components. The hydrocalumite contains calcium and aluminum as the main components; these have high anion exchange performance, so that these can be suitably used as anion trapping materials for, for instance, preventing corrosion.

### (Step S23)

When obtaining the hydrocomposite, by heating the solution in which the molten chips are dissolved at a temperature within the range of 80-200 °C, preferably 80-120 °C, and then starting the reaction, hydrogarnet can also be obtained. The concentration of the solution is not specifically limited; the molten chips are preferably contained at an amount of about 1-3 g to 10 mL solvent. Garnet is a silicate which may contain, for example, calcium, aluminum, magnesium, and iron; so, the components contained in the iron and steel slag can be fully used. In the same manner as step S13, in the step S23, iron and steel slag components as a whole are made readily-soluble and dissolved in the solution; so, the components of the iron and steel slag can be fully used and it is possible to obtain the hydrogarnet without adding other components. Hydrogarnet has properties of absorbing and fixing high-temperature acid gas, therefore it can be suitably used as an absorbent or capture agent for the toxic exhaust gas of an incinerator or the like.

### (Step S33)

When obtaining the hydrocomposite, by adding a chelator to the solution in which the molten chips are dissolved and then making the mixture react at a temperature within the range of 20-200 °C, preferably 60-120 °C, zeolite can be obtained. The concentration of the solution is not particularly limited; the molten chips are preferably contained at an amount of about 0.5-2 g to 10 mL solvent. The chelator is preferably added at an amount of about 100-250 parts by mass to 100 parts by mass of the molten chips. Zeolite is synthesized by using mainly aluminum components and silicon components both contained in the iron and steel slag. Due to this, a chelator is added so as to prevent other components such as calcium from contributing to the reaction. In this embodiment of the invention, since the molten chips are made readily-soluble, the whole of the components of the iron and steel slag are dissolved and ionized in the solution. Therefore, compared with the case of removing a particular component from solid components or gas components, the particular components can be easily captured by using the chelator and thereby the process will not be complicated. The chelator is not particularly limited as long as it can capture ions of components other than aluminum components and silicon components; it is particularly preferably ethylenediamine tetraacetate (EDTA). With the chelator, it is possible to capture particularly the calcium component and prevent it from contributing to the reaction. The calcium component captured by the chelator can be easily recovered by adjusting the pH of the solution after the reaction.

By the above-described steps S1 to S3, each of the hydrocomposites are produced from the iron and steel slag. In this embodiment of the invention, iron and steel slag is made into the form of molten chips and the components contained in the iron and steel slag are made readily-soluble; thereby it is possible to effectively utilize the iron and steel slag as a whole in the synthetic reaction without adding other components. Hereinafter, the production method of the invention and the hydrocomposites obtained by the production method will be described in further detail with reference to the Examples.

### Examples

### (Example 1: Influence of species of the solid base on the products (molten chips))

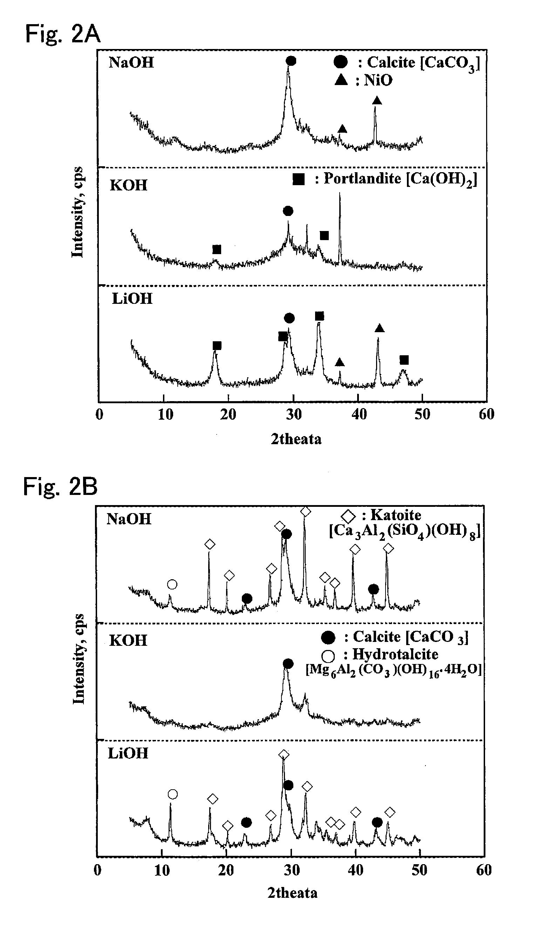

A granulated slag was pulverized down to 1 mm or less by pulverizer. Ten grams each of the powder thus obtained was charged in crucibles made of nickel; 16g solid base was added to each crucible. In different crucibles, the base used was respectively sodium hydroxide, potassium hydroxide, or lithium hydroxide. The granulated slag powder and the solid base were then pulverized and mixed. The obtained mixture was heated and melted at 600 °C for 6 hours by electric furnace to produce respective molten chips. To 20 mL distilled water, 2g of the obtained molten chips was added and stirred at 700 rpm for 24 hours. Then, each of the products were analyzed by XRD (that means powder X-ray diffraction measurement using CuKα as a radiation source. As described above, RAD-C manufactured by Rigaku Corporation was used as an X-ray diffraction measurement; by carrying out powder X-ray diffraction measurement in accordance with the step operation method (angle range: 2θ = 5-50°, step width: 0.2°, holding time: 300 seconds), data relating to the diffraction peaks was obtained. Hereinafter, it is the same). The results are shown in Fig. 2A. As seen from the Fig. 2A, calcite and poltlandite were produced; it is understood that yield of the intended product is different depending on the species of the solid base (production of NiO is attributed to the crucible) .

Further, product obtained under the same conditions was sealed in a pressure tight case and then synthetic reaction was carried out at 80 °C for 6 hours by electric furnace; after that, each of the products was analyzed by XRD. The results are shown in Fig. 2B. As seen from Fig. 2B, in the cases of using NaOH and LiOH as the solid base, production of katoite as a species of garnet and hydrotalcite having a similar structure as that of hydrocalumite was observed. On the other hand, in a case of using KOH as the solid base, production of the intended products was not observed.

### (Example 2: Effect of adding EDTA)

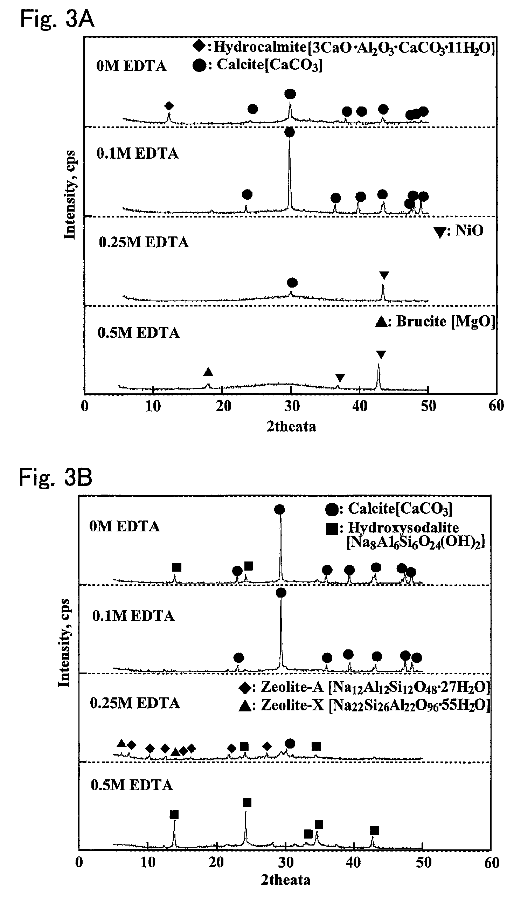

A granulated slag was pulverized down to 1 mm or less by pulverizer. Ten grams of the powder thus obtained was charged in a crucible made of nickel; 16g each of sodium hydroxide was added to the crucible and then the granulated slag powder and the solid base were pulverized and mixed. The obtained mixture was heated and melted at 600 °C for 6 hours by electric furnace to produce molten chips. To 0M, 0.1M, 0.25M, 0.5M concentration of 20 mL ethylenediamine tetraacetate (EDTA) solutions, 2g each of molten chips was respectively added and stirred at 700 rpm for 24 hours. Then, each of the products were analyzed by XRD. The results are shown in Fig. 3A. As seen from the Fig. 3A, in the case of 0M, production of calcite can be observed; with the increasing concentration of EDTA, it is understood that calcite becomes an amorphous substance (production of NiO is attributed to the crucible.).

Further, product obtained under the same conditions was sealed in a pressure tight case and then synthetic reaction was carried out at 100 °C for 6 hours by electric furnace; after that, each of the products was analyzed by XRD. The results are shown in Fig. 3B. As seen from Fig. 3B, in the 0.25M and 0.5M EDTA solution where amorphous substance has been obtained before heating, production of zeolite A, zeolite X, and hydroxysodalite were observed.

The results shown in Fig. 3B will be described in detail as follows. In 0.25M EDTA solution, a diffraction peak relating to the (111) crystal face of zeolite X appears at θ = 6-7°; diffraction peaks relating to the (200) crystal face of zeolite A appear at θ = 7-8°; a diffraction peak relating to the (211) crystal face of hydroxysodalite appears at θ = 24-25°; and a diffraction peak relating to the (104) crystal face of calcite appears at θ = 29-30°. Herein, where: the strength in X-ray diffraction of the (111) crystal face of the zeolite X is denoted "α₃"; the strength in X-ray diffraction of the (200) crystal face of the zeolite A is denoted "α₄"; the strength in X-ray diffraction of the (211) crystal face of the hydroxysodalite is denoted "α₅"; and the strength in X-ray diffraction of the (104) crystal face of calcite is denoted "β₃", each of the ratios (i.e. α₃/β₃, α₄/β₃, or α₅/β₃) is 0.5 or more and 1 or less. Specifically, α₃/β₃ is 0.86, α₄/β₃ is 0.88, and α₅/β₃ is 0.58.

With respect to the products after 24 hours stirring (before heating) and the products after heating at 100 °C for 6 hours (after heating), the amount of calcium extracted in the solution was determined by ICP emission spectroscopy. The results are shown in Table 1. Calcium is one of the interfering elements in zeolite synthesis. The amount of calcium extracted in the solution increases by addition of EDTA as a chelator; it is understood that the amount increases further more by heating. In addition, it is also understood that the masking effect is even maintained or facilitated by heating.

**(Table 1)**

| EDTA concentration (M) | | 0 | 0.1 | 0.25 | 0.5 |
|---|---|---|---|---|---|
| Ca concentration (mg/L) | Before heating | 0 | 1244 | 6473 | 9273 |
| | After heating | 0 | 6080 | 11901 | 16611 |

### (Example 3: Influence of Melting temperature)

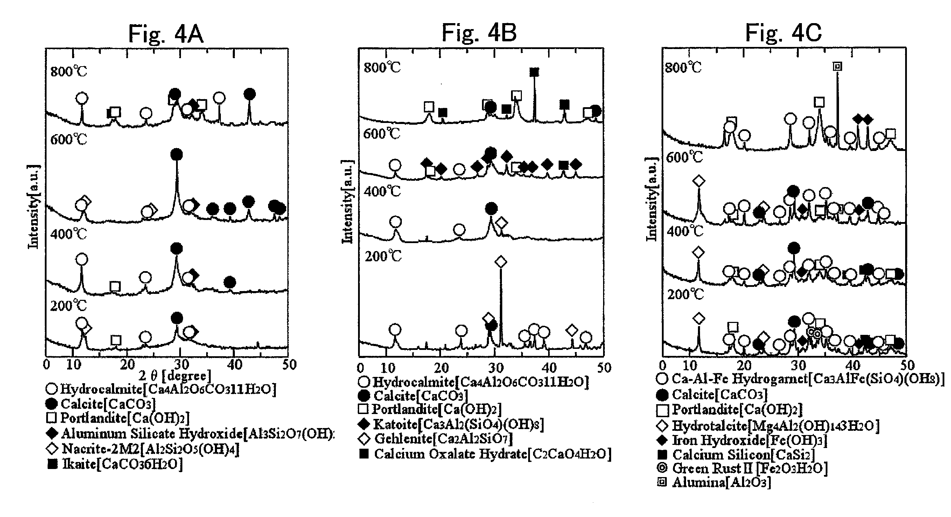

A granulated slag, a slowly-cooled slag, and a converter slag were respectively pulverized down to 1 mm or less by pulverizer. To 10g of each powder thus obtained, 16g of sodium hydroxide was added; then, the powder and sodium hydroxide were pulverized and mixed. The obtained mixture was charged in a crucible made of nickel and then melted with heating at 200 °C, 400 °C, 600 °C, and 800 °C for 6 hours by electric furnace. The molten chips after melting were added to 80 mL distilled water and then aged with stirring at 700 rpm at room temperature for 24 hours. Each of the products derived from the respective slags was analyzed by XRD. The results are shown in Figs. 4A to 4C. Fig. 4A shows the results for granulated slag, Fig. 4B shows the results for slowly-cooled slag, and Fig. 4C shows the results for converter slag. As seen from these figures, it is understood that the granulated slag is not influenced by the melting temperature much. On the other hand, with regard to the other slags, when the melting temperature is between 200 °C and 400 °C, crystalline components in the slag are seen to remain; when the melting temperature is at 600 °C, the crystalline components in the slag disappear and hydrocalumite (including hydrotalcite) is seen to be produced most. When the melting temperature is raised up to 800 °C, it is understood that hydrocalumite is hardly produced.

The results shown in Figs. 4A to 4C will be described in detail as follows. A diffraction peak relating to the (102) crystal face of hydrocalumite appears at θ = 11-12°; a diffraction peak relating to the (104) crystal face of calcite appears at θ = 29-30°. Herein, where: the strength in X-ray diffraction of the (102) crystal face of hydrocalumite is denoted "α₂"; the strength in X-ray diffraction of the (104) crystal face of calcite is denoted "β₂", the ratio (α₂/β₂) in Fig. 4A is 0.72-1.07, the ratio (α₂/β₂) in Fig. 4B is 0.60-1.61, and the ratio (α₂/β₂) in Fig. 4C is 0.75-1.82. As a whole, the ratio (α₂/β₂) is within the range of 0.60-1.82; particularly the ratio (α₂/β₂) is concentrated in the range of 0.60-0.75. The results shown in Fig. 4C will be described in further detail as follows. A diffraction peak relating to (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) is within the range of 0.31-1.10.

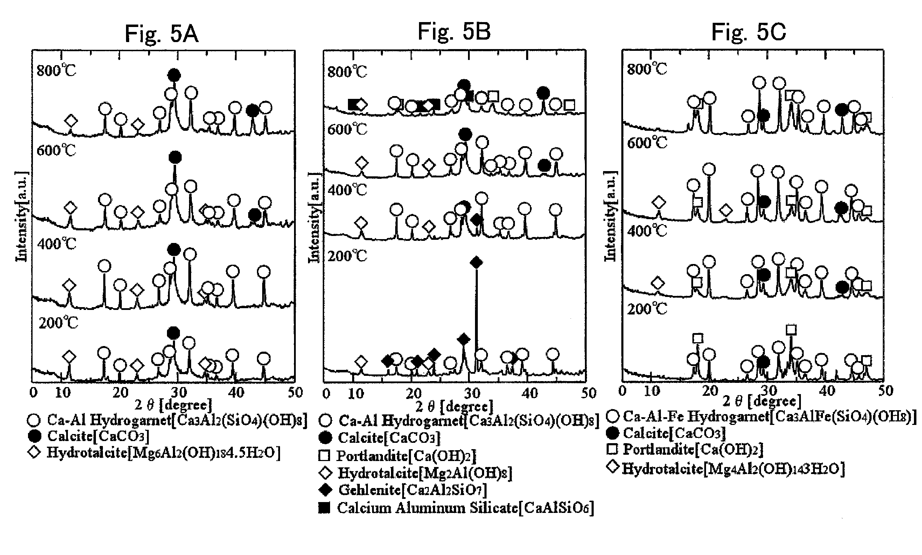

Further, molten chips melted under the same conditions as above were added to a solution in the same manner as above and then stirred for 24 hours. After that, it was sealed in a pressure tight case and then heated at 80 °C for 6 hours. Each of the products was analyzed by XRD. The results are shown in Figs. 5A to 5C. Fig. 5A shows the results for granulated slag, Fig. 5B shows the results for slowly-cooled slag, and Fig. 5C shows the results for converter slag. As seen from these figures, with respect to the melting temperature of the molten chips, hydro-grossular garnet (it may be called hydrogarnet) is seen to be favorably produced under the same conditions as those of hydrocalumite. As above, the melting temperature of molten chips before synthesis and conversion to hydrocomposite is assumed to be 600 °C.

The results of Figs. 5A to 5C will be described in detail as follows. A diffraction peak relating to the (102) crystal face of hydrocalumite (hydrotalcite) appears at θ = 11-12°; a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", looking into the results in which hydrocalumite is produced, the ratio (α₂/β₂) in Fig. 5A is 0.11-0.38, the ratio (α₂/β₂) in Fig. 5B is 0.07-0.30, and the ratio (α₂/β₂) in Fig. 5C is 0.1-0.65. As a whole, the ratio (α₂/β₂) is within the range of 0.07-0.65; particularly the ratio (α₂/β₂) is concentrated in the range of 0.1-0.3. The results shown in Figs. 5A to 5C will be described in further detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) in Fig. 5A is 0.11-0.38, the ratio (α₁/β₁) in Fig. 5B is 0.1-1.09, and the ratio (α₁/β₁) in Fig. 5C is 1.85-5.2. As a whole, the ratio (α₁/β₁) is within the range of 0.1-5.2; particularly the ratio (α₁/β₁) is concentrated in the range of 0.6-1.0.

### (Example 4: Influence of Additive amount of the Solid base)

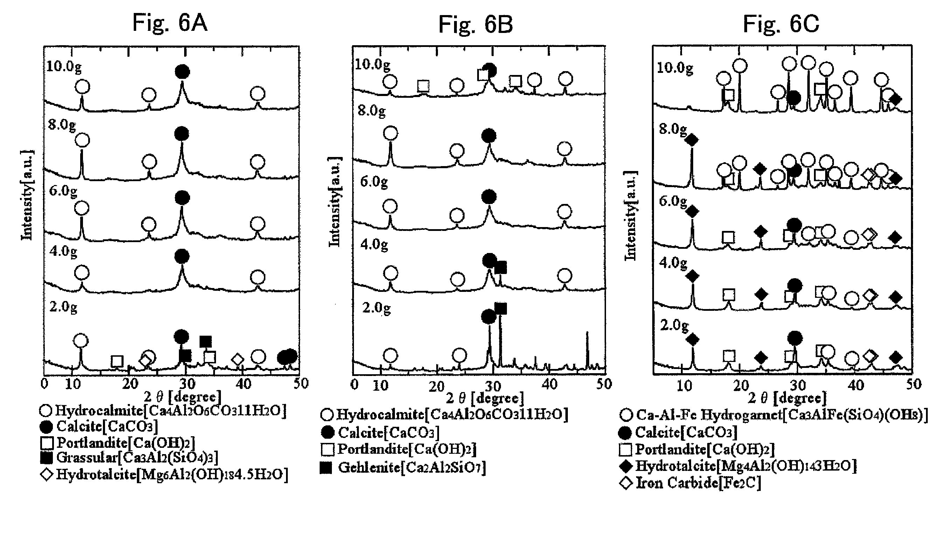

A granulated slag, a slowly-cooled slag, and a converter slag were respectively pulverized down to 1 mm or less by pulverizer. To 5g of each powder thus obtained, 2g, 4g, 5g, 8g, and 10g of sodium hydroxide were respectively added; then, the powder and sodium hydroxide were pulverized and mixed. Each of the obtained mixtures was charged in a crucible made of nickel and then melted with heating at 600 °C for 6 hours by electric furnace. The molten chips after melting were added to 40 mL distilled water and then stirred at 700 rpm at room temperature for 24 hours. Each of the products was analyzed by XRD. The results are shown in Figs. 6A to 6C. Fig. 6A shows the results for granulated slag, Fig. 6B shows the results for slowly-cooled slag, and Fig. 6C shows the results for converter slag. As seen from these figures, from all the slags, with increase in the additive amount of the solid base, hydrocalumite (including hydrotalcite) is seen to be favorably produced. Particularly in a case of mixing ratio: 1.6 (that is the case of adding 8g of the solid base to 5g of the powder), hydrocalumite is observed to be produced most. On the other hand, in a case of raising the additive amount of the solid base so that the mixing ratio becomes up to 2.0 (that is the case of adding 10g of the solid base to 5g of the powder), it is found out that hydrocalumite is difficult to be produced.

The results of Figs. 6A to 6C will be described in detail as follows. A diffraction peak relating to the (102) crystal face of hydrocalumite appears at θ = 11-12'; a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) in Fig. 6A is 0.37-0.87, the ratio (α₂/β₂) in Fig. 6B is 0.11-1.02, and the ratio (α₂/β₂) in Fig. 6C is 0.53-3.78. As a whole, the ratio (α₂/β₂) is within the range of 0.11-0.38; particularly the ratio (α₂/β₂) is concentrated in the range of 0.7-0.8. The results shown in Fig. 6C will be described in further detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", looking into the results in which hydrogarnet is produced, the ratio (α₁/β₁) is 0.1-7.49.

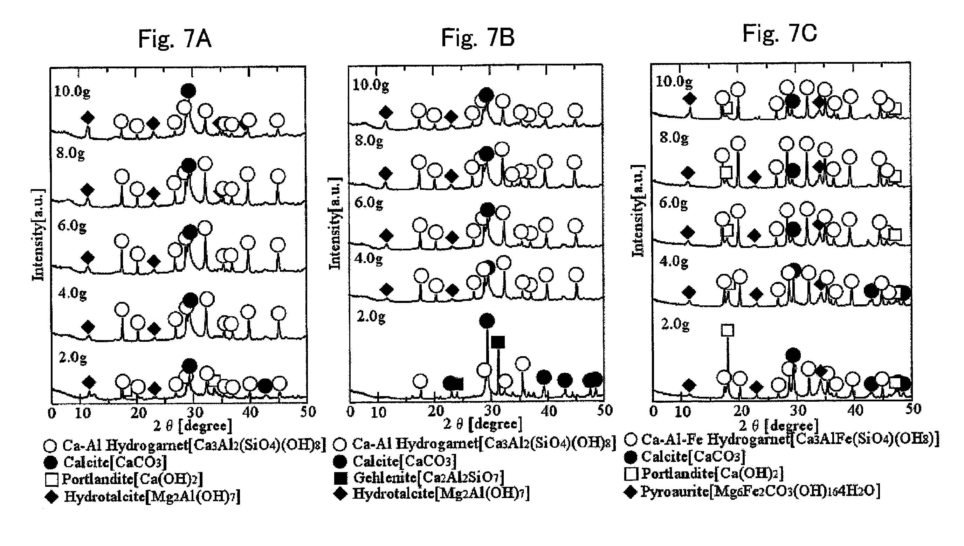

Further, each of the molten chips melted under the same conditions as above was added to each of the solutions in the same manner as above and then stirred for 24 hours. After that, it was sealed in a pressure tight case and then heated at 80 °C for 6 hours. Each of the products was analyzed by XRD. The results are shown in Figs. 7A to 7C. Fig. 7A shows the results for granulated slag, Fig. 7B shows the results for slowly-cooled slag, and Fig. 7C shows the results for converter slag. As seen from these figures, in the case where the mixing ratio of the powder and the solid base is 0.8-1.6 (i.e. the case of adding 4-8g of the solid base to 5g of the powder), hydro-grossular garnet (it may be called hydrogarnet) is seen to be favorably produced. As above, with respect to the mixing ratio of the solid base and the slag powder in the molten chips, a mixture which is melted with the mixing ratio of about 1.6 is most suitably used for hydrocalumite and a mixture which is melted with the mixing ratio of about 0.8 to about 1. 6 is most suitably used for hydro-grossular garnet.

The results of Figs. 7A to 7C will be described in detail as follows. A diffraction peak relating to the (420) crystal face of hydrogarnet appears at θ = 32-33°. Herein, the strength in X-ray diffraction relating to the (420) crystal face of hydrogarnet is denoted "α₁" and the strength in X-ray diffraction relating to the (104) crystal face of calcite is denoted "β₁", looking into the results in which hydrogarnet is produced, the ratio (α₁/β₁) in Fig. 7A is 0.17-0.27, the ratio (α₁/β₁) in Fig. 7B is 0.1-0.3, and the ratio (α₁/β₁) in Fig. 7C is 0.08-0.94. As a whole, the ratio (α₁/β₁) is within the range of 0.08-0.94; particularly the ratio (α₁/β₁) is concentrated in the range of 0.15-0.18. The results shown in Figs. 7A and 7B will be described in further detail as follows. A diffraction peak relating to the (102) crystal face of hydrocalumite(hydrotalcite) appears at θ = 11-12°. Herein, where the strength in X-ray diffraction relating to the (102) crystal face of hydrocalumite is denoted "α₂" and the strength in X-ray diffraction relating to the (104) crystal face of calcite is denoted "β₂", looking into the results in which hydrocalumite is produced, the ratio (α₂/β₂) in Fig. 7A is 0.46-1.23 and the ratio (α₂/β₂) in Fig. 7B is 0.1-1.32. As a whole, the ratio (α₂/β₂) is within the range of 0.1-1.32; particularly the ratio (α₂/β₂) is concentrated in the range of 1.2-1.3.

### (Example 5: Influence of solid/liquid ratio)

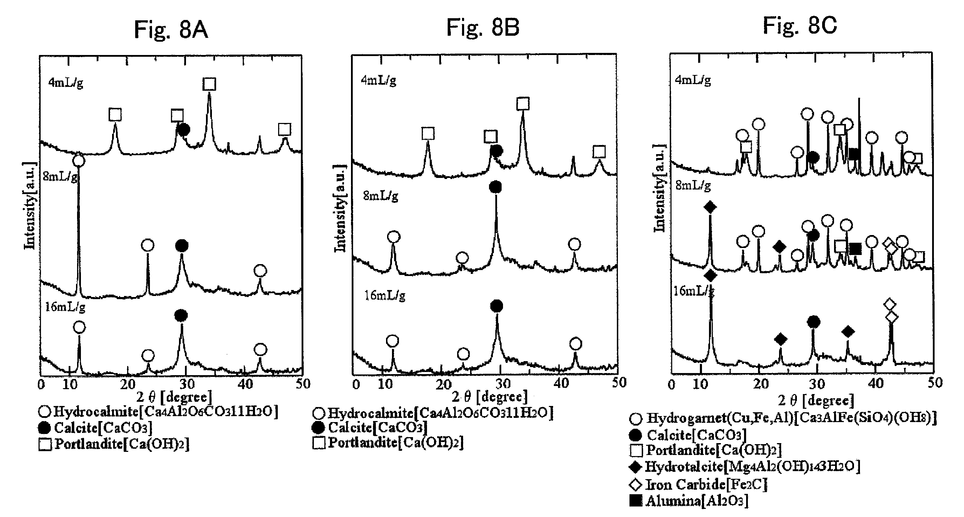

A granulated slag, a slowly-cooled slag, and a converter slag were respectively pulverized down to 1 mm or less by pulverizer. To 10g of each powder thus obtained, 16g of sodium hydroxide was added; then, the powder and sodium hydroxide were pulverized and mixed. The obtained mixture was charged in a crucible made of nickel and then melted with heating at 600 °C for 6 hours by electric furnace. The molten chips after melting were added to 40 mL, 80 mL, and 160 mL distilled water (i.e. 4, 8, 16 mL/g-mixture.) and then respectively stirred at 700 rpm at room temperature for 24 hours. Each of the products was analyzed by XRD. The results are shown in Figs. 8A to 8C. Fig. 8A shows the results for granulated slag, Fig. 8B shows the results for slowly-cooled slag, and Fig. 8C shows the results for converter slag. As seen from these figures, when the amount of distilled water is small (for example, in the case of 4 mL/g-mixture), it is found out that calcite is produced from granulated slag and slowly-cooled slag, while hydro-grossular garnet (i.e. hydrogarnet.) is produced from converter slag. In the case with 8 mL/g and 16 mL/g distilled water, it is also found out that hydrocalumite is produced.

The results of Figs. 8A to 8C will be described in detail as follows. A diffraction peak relating to the (102) crystal face of hydrocalumite (hydrotalcite) appears at θ =11-12° and a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", looking into the results in which hydrocalumite is produced, the ratio (α₂/β₂) in Fig. 8A is 0.11-0.67, the ratio (α₂/β₂) in Fig. 8B is 0.1-0.54, and the ratio (α₂/β₂) in Fig. 8C is 0.41-2.33. As a whole, the ratio (α₂/β₂) is within the range of 0.1-2.33; particularly the ratio (α₂/β₂) is concentrated in the range of 0.4-0.5. The results shown in Fig. 8C will be described in further detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) is 0.14-4.89.

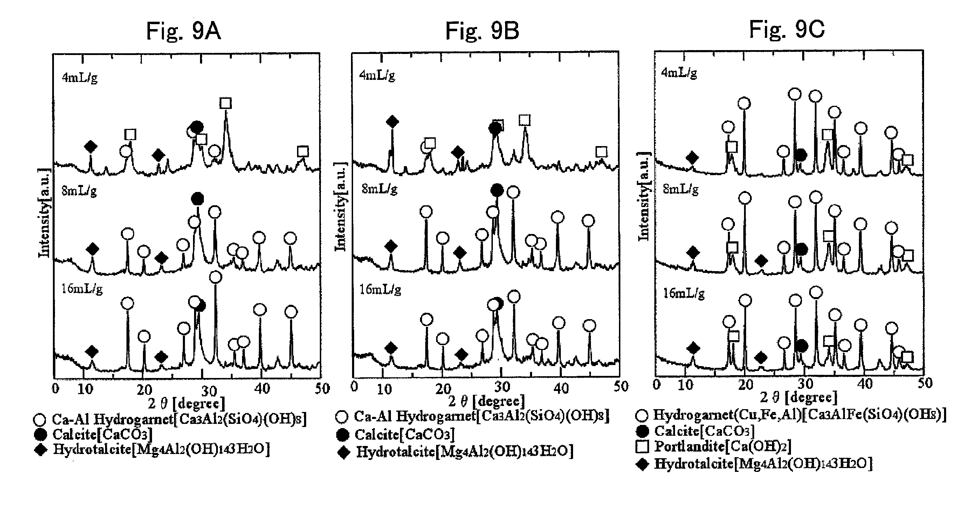

Further, each of the molten chips melted under the same conditions as above was added to each of the solutions in the same manner as above and then stirred for 24 hours. After that, it was sealed in a pressure tight case and then heated at 80 °C for 6 hours. Each of the products was analyzed by XRD. The results are shown in Figs. 9A to 9C. Fig. 9A shows the results for granulated slag, Fig. 9B shows the results for slowly-cooled slag, and Fig. 9C shows the results for converter slag. As seen from these figures, hydro-grossular garnet (hydrogarnet) is seen to be favorably produced from granulated slag and slowly-cooled slag under the same conditions of hydrocalumite. On the other hand, with regard to converter slag, hydro-grossular garnet is seen to be produced under all the conditions. The results shown in Figs. 9A to 9C will be described in further detail as follows. A diffraction peak relating to the (102) crystal face of hydrocalumite (hydrotalcite) appears at θ = 11-12° and a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) in Fig. 9A is 0.32-0.84, the ratio (α₂/β₂) in Fig. 9B is 0.15-1.12, and the ratio (α₂/β₂) in Fig. 9C is 0.27-0.31. As a whole, the ratio (α₂/β₂) is within the range of 0.15-1.12; particularly the ratio (α₂/β₂) is concentrated in the range of 0.2-0.4. The results shown in Figs. 9A to 9C will be described in further more detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", looking into the results in which hydrogarnet is produced, the ratio (α₁/β₁) in Fig. 9A is 0.47-1.51, the ratio (α₁/β₁) in Fig. 9B is 0.1-1.13, and the ratio (α₁/β₁) in Fig. 9C is 2.41-4.0. As a whole, the ratio (α₁/β₁ is within the range of 0.1-4.0; particularly the ratio (α₁β₁ is concentrated in the range of 0.9-1.2.

### (Example 6: Influence of Stirring speed)

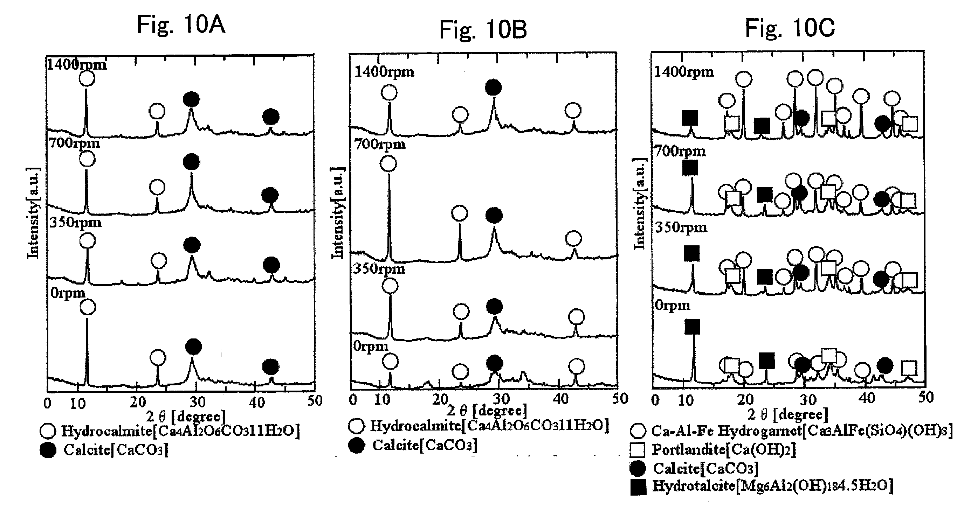

A granulated slag, a slowly-cooled slag, and a converter slag were respectively pulverized down to 1 mm or less by pulverizer. To 10g of each powder thus obtained, 16g of sodium hydroxide was added; then, the powder and sodium hydroxide were pulverized and mixed. The obtained mixture was charged in a crucible made of nickel and then melted with heating at 600 °C for 6 hours by electric furnace. The molten chips after melting were added to 80 mL distilled water and then stirred at room temperature for 24 hours. The stirring speed was 0 rpm, 350 rpm, 700 rpm, and 1400 rpm. Each of the products was analyzed by XRD. The results are shown in Figs. 10A to 10C. Fig. 10A shows the results for granulated slag, Fig. 10B shows the results for slowly-cooled slag, and Fig. 10C shows the results for converter slag. As seen from these figures, it is seen that hydrocalumite is produced with stirring at 0 rpm. On the other hand, when the stirring speed was raised up to 1400 rpm, hydrocalumite was hard to be produced; production of hydro-grossular garnet from converter slag was observed.

The results of Figs. 10A to 10C will be described in detail as follows. A diffraction peak relating to the (102) crystal face of hydrocalumite (hydrotalcite) appears at θ = 11-12' and a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂, the ratio (α₂/β₂) in Fig. 10A is 1.07-1.81, the ratio (α₂/β₂) in Fig. 10B is 0.94-2.12, and the ratio (α₂/β₂) in Fig. 10C is 0.95-3.89. As a whole, the ratio (α₂/β₂) is within the range of 0.94-3.89; particularly the ratio (α₂/β₂) is concentrated in the range of 1.0-2.1. The results shown in Fig. 10C will be described in further detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) is 0.83-5.1.

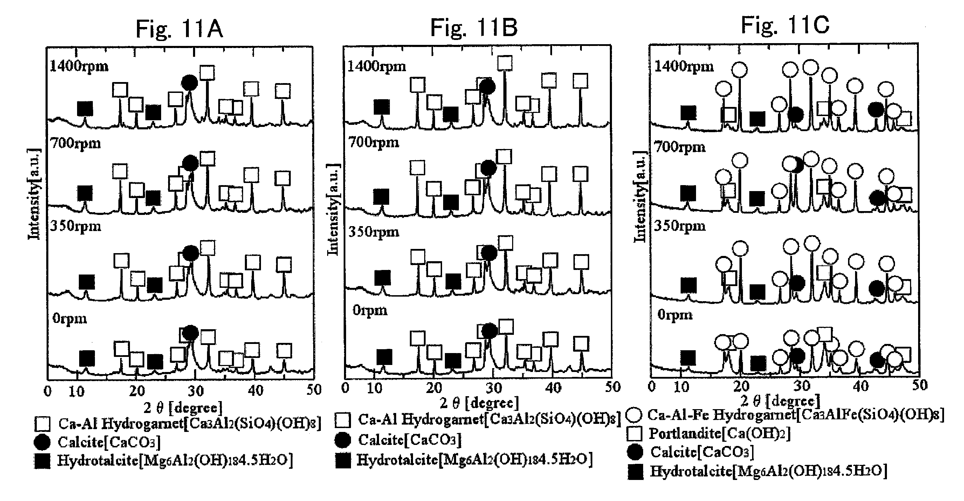

Further, each of the molten chips melted under the same conditions as above was added to each of the solutions in the same manner as above and then stirred for 24 hours. After that, it was sealed in a pressure tight case and then heated at 80 °C for 6 hours. Each of the products was analyzed by XRD. The results are shown in Figs. 11A to 11C. Fig. 11A shows the results for granulated slag, Fig. 11B shows the results for slowly-cooled slag, and Fig. 11C shows the results for converter slag. As seen from these figures, hydro-grossular garnet (hydrogarnet) is seen to be favorably produced regardless of the stirring speed.

The results of Figs. 11A to 11C will be described in detail as follows. A diffraction peak relating to the (102) crystal face of hydrocalumite (hydrotalcite) appears at θ = 11-12° and a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) in Fig. 11A is 0.16-0.32, the ratio (α₂/β₂) in Fig. 11B is 0.20-0.40, and the ratio (α₂/β₂) in Fig. 11C is 0.4-0.6. As a whole, the ratio (α₂/β₂) is within the range of 0.16-0.6; particularly the ratio (α₂/β₂) is concentrated in the range of 0.3-0.4. The results shown in Figs. 11A to 11C will be described in further detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) in Fig. 11A is 0.78-1.36, the ratio (α₁/β₁) in Fig. 11B is 1.19-2.0, and the ratio (α₁/β₁) in Fig. 11C is 2.63-6.63. As a whole, the ratio (α₁/β₁) is within the range of 0.78-6.63; particularly the ratio (α₁/β₁) is concentrated in the range of 1.1-1.3.

### (Example 7: Influence of Stirring time)

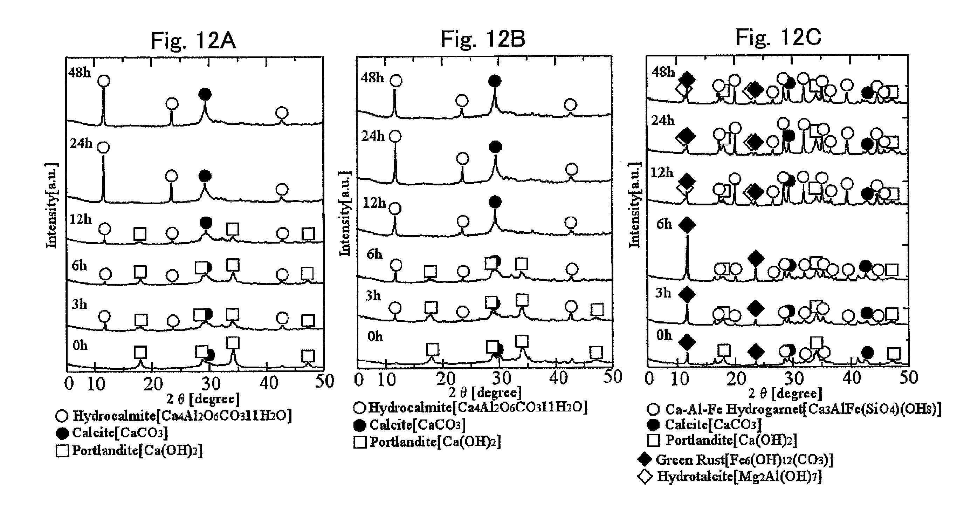

A granulated slag, a slowly-cooled slag, and a converter slag were respectively pulverized down to 1 mm or less by pulverizer. To 10g of the powder thus obtained, 16g of sodium hydroxide was added; then, the powder and sodium hydroxide were pulverized and mixed. The obtained mixture was charged in a crucible made of nickel and then melted with heating at 600 °C for 6 hours by electric furnace. The molten chips after melting were added to 80 mL distilled water and then stirred at 700 rpm at room temperature for each stirring time. The stirring times were respectively 5 minutes (shown as 0 hour in Figs. 12A to 12C), 3 hours, 6 hours, 12 hours, 24 hours, and 48 hours. Each of the products was analyzed by XRD. The results are shown in Figs. 12A to 12C. Fig. 12A shows the results for granulated slag, Fig. 12B shows the results for slowly-cooled slag, and Fig. 12C shows the results for converter slag. As seen from these figures, as stirring time goes by, it is seen that portlandite disappears, while hydrocalumite is produced instead. In addition, from granulated slag and slowly-cooled slag, hydrocalumite is produced most with 24-hour stirring; while, from converter slag, hydrocalumite is produced most with 6-hour stirring.

The results of Figs. 12A to 12C will be described in detail as follows. A diffraction peak relating to the (102) crystal face of hydrocalumite (hydrotalcite) appears at θ = 11-12° and a diffraction peak relating to (the 104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", looking into the results in which hydrocalcite is produced, the ratio (α₂/β₂) in Fig. 12A is 0.1-1.81, the ratio (α₂/β₂) in Fig. 12B is 0.1-1.55, and the ratio (α₂/β₂) in Fig. 12C is 0.58-5.95. As a whole, the ratio (α₂/β₂) is within the range of 0.1-5.95; particularly the ratio (α₂/β₂) is concentrated in the range of 0.6-1.5. The results shown in Fig. 12C will be described in further detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) is 0.42-1.83.

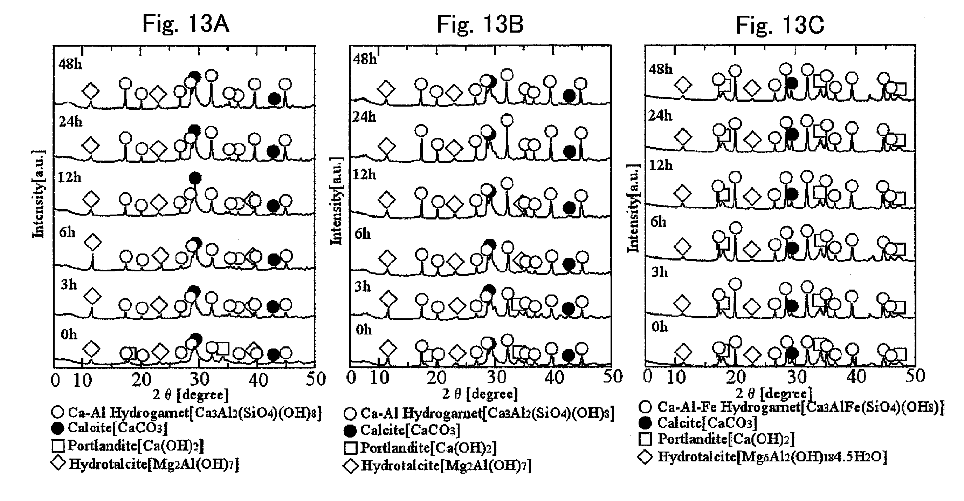

Further, each of the molten chips melted under the same conditions as above was added to each of the solutions in the same manner as above and then stirred for each stirring time. After that, it was sealed in a pressure tight case and then heated at 80 °C for 6 hours. Each of the products was analyzed by XRD. The results are shown in Figs. 13A to 13C. Fig. 13A shows the results for granulated slag, Fig. 13B shows the results for slowly-cooled slag, Fig. 13C shows the results for converter slag. As seen from the figures, different from hydrocalumite, it can be seen that hydro-grossular garnet (hydrogarnet) is favorably produced with stirring for 3 hours or more.

The results of Figs. 13A to 11C will be described in detail as follows. A diffraction peak relating to the (102) crystal face of hydrocalumite (hydrotalcite) appears at θ = 11-12° and a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) in Fig. 13A is 0.19-0.57, the ratio (α₂/β₂) in Fig. 13B is 0.25-0.49, and the ratio (α₂/β₂) in Fig. 13C is 0.3-0.69. As a whole, the ratio (α₂/β₂) is within the range of 0.19-0.69; particularly the ratio (α₂/β₂) is concentrated in the range of 0.2-0.5. The results shown in Figs. 13A to 13C will be described in further detail as follows. A diffraction peak relating to the (420) crystal face of hydrogarnet appears at θ = 32-33°. Herein, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) in Fig. 13A is 0.47-1.27, the ratio (α₁/β₁) in Fig. 13B is 0.79-1.79, and the ratio (α₁/β₁) in Fig. 13C is 2.24-4.92. As a whole, the ratio (α₁/β₁) is within the range of 0.47-4.92; particularly the ratio (α₁/β₁) is concentrated in the range of 1.2-3.3.

### (Example 8: Influence of Heating temperature)

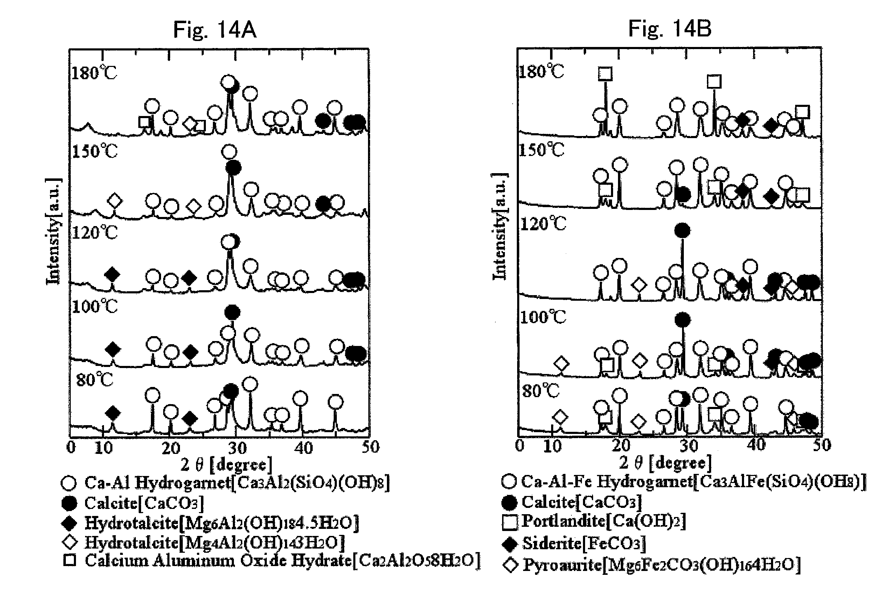

A granulated slag, a slowly-cooled slag, and a converter slag were respectively pulverized down to 1 mm or less by pulverizer. To 10g of each powder thus obtained, 16g of sodium hydroxide was added; then, the powder and sodium hydroxide were pulverized and mixed. The obtained mixture was charged in a crucible made of nickel and then melted with heating at 600 °C for 6 hours by electric furnace. The molten chips after melting was added to 80 mL distilled water and then stirred at 700 rpm at room temperature for 24 hours. After that, it was sealed in a pressure tight case and then heated at 80 °C, 100 °C, 120 °C, 150 °C, and 180 °C, for 6 hours. Each of the products was analyzed by XRD. The results are shown in Figs. 14A and 14B. Fig. 14A shows the results for granulated slag and Fig. 14B shows the results for converter slag. As seen from these figures, hydro-grossular garnet (hydrogarnet) is favorably produced at a lower temperature. With regard to the converter slag, portlandite is produced at a higher temperature.

The results of Fig. 14A will be described in detail as follows. Diffraction peak relating to the (102) crystal face of hydrocalumite (hydrotalcite) appears at θ = 11-12° and a diffraction peak relating to the (104) crystal face of calcite appears at θ = 29-30°. Herein, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) in Fig. 14A is 0.19-2.6. The results of Figs. 14A and 14B will be described in further detail as follows. A diffraction peak relating to the (420) crystal face of hydrogarnet appears at θ = 11-12°. Here, when the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) in Fig. 14A is 0.37-0.53 and the ratio (α₁/β₁) in Fig. 14B is 0.50-8.1. As a whole, the ratio (_{α}1/β₁) is within the range of 0.37-8.1; particularly the ratio (α₁/β₁) is concentrated in the range of 0.3-0.5.

### (Example 9: Influence of Heating temperature and Heating time)

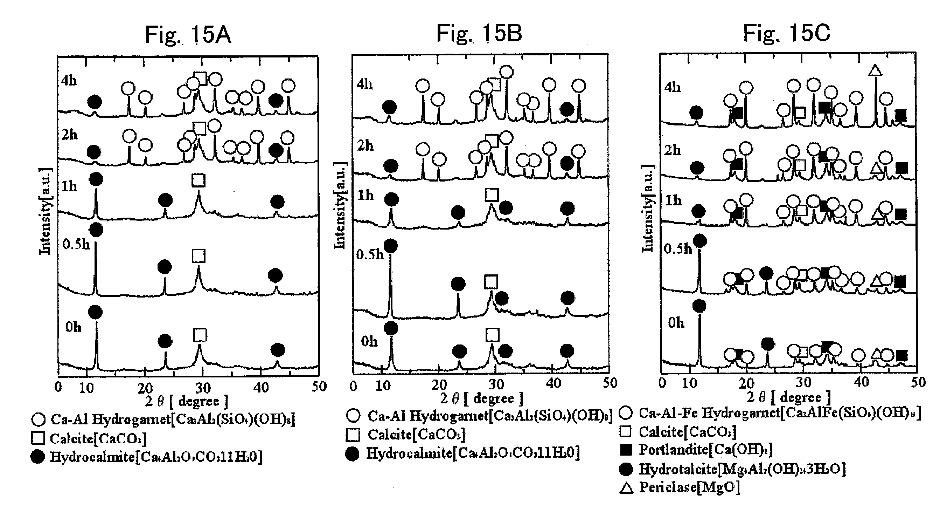

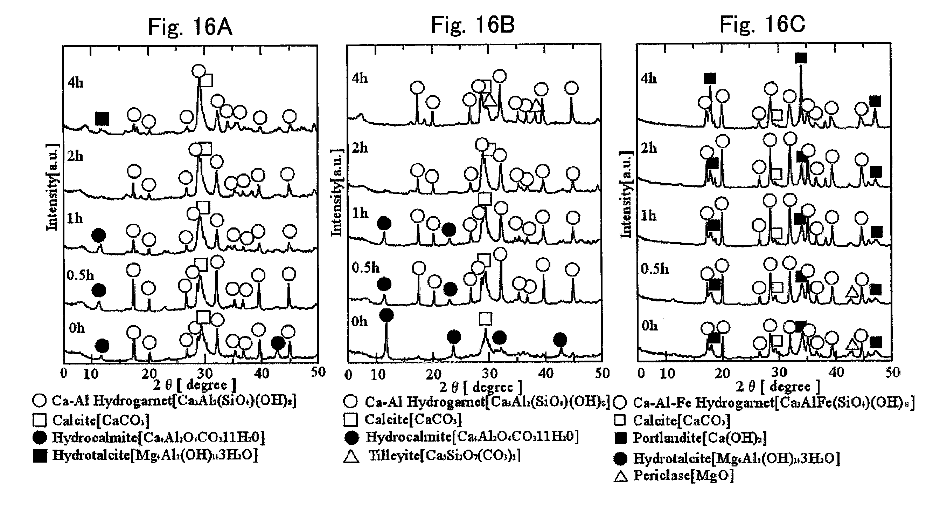

A granulated slag, a slowly-cooled slag, and a converter slag were respectively pulverized down to 1 mm or less by pulverizer. To 10g of the powder thus obtained, 16g of sodium hydroxide was added; then, the powder and sodium hydroxide were pulverized and mixed. The obtained mixture was charged in a crucible made of nickel and then melted with heating at 600 °C for 6 hours by electric furnace. The molten chips after melting were added to 80 mL distilled water and then stirred at 700 rpm at room temperature for 24 hours. After that, it was sealed in a pressure tight case and then heated at 80 °C and 180 °C for 0 hour, 0.5 hour, 1.2 hours, and 4 hours to obtain the products. Each of the products was analyzed by XRD. The results at 80 °C heating temperature are shown in Figs. 15A to 15C; the results at 180 °C heating temperature are shown in Figs. 16A to 16C. Fig. 16A shows the results for granulated slag, Fig. 16B shows the results for slowly-cooled slag, and Fig. 16C shows the results for converter slag. As seen from these figures, with higher heating temperature, hydrocalumite rapidly decreases and hydro-grossular garnet (hydrogarnet) is produced.

The results of Figs. 15A to 15C will be described in detail as follows. A diffraction peak relating to the (102) crystal face of hydrocalumite (hydrotalcite) appears at θ =11-12° and a diffraction peak relating to the (104) crystal face of calcite appears at θ = 29-30°. Here, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) in Fig. 15A is 0.11-1.61, the ratio (α₂/β₂) in Fig. 15B is 0.19-2.6, and the ratio (α₂/β₂) in Fig. 15C is 0.20-5.48. As a whole, the ratio (α₂/β₂) is within the range of 0.11-5.48; particularly the ratio (α₂/β₂) is concentrated in the range of 1.3-1.9. The results of Figs. 15A to 15C will be described in further detail as follows. A diffraction peak relating to the (420) crystal face of hydrogarnet appears at θ = 32-33°. Here, where the strength in X-ray diffraction relating to the (420) crystal face of hydrogarnet is denoted "α₁" and the strength in X-ray diffraction relating to the (104) crystal face of calcite is denoted "β₁", looking into the results in which hydrogarnet is produced, the ratio (α₁/β₁) in Fig. 15A is 0.1-0.99, the ratio (α₁/β₁) in Fig. 15B is 0.1-1.3, and the ratio (α₁/β₁) in Fig. 15C is 0.97-5.45. As a whole, the ratio (α₁/β₁) is within the range of 0.1-5.45; particularly the ratio (α₁/β₁) is concentrated in the range of 0.1-1.

The results of Figs. 16A and 16B will be described in detail as follows. A diffraction peak relating to the (102) crystal face of hydrocalumite (hydrotalcite) appears at θ = 11-12' and a diffraction peak relating to the (104) crystal face of calcite appears at θ = 29-30'. Here, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) in Fig. 16A is 0.07-0.27, the ratio (α₂/β₂) in Fig. 16B is 0-1.19, and the ratio (α₂/β₂) in Fig. 16C is 0-0. As a whole, the ratio (α₂/β₂) is within the range of 0.07-1.19; particularly the ratio (α₂/β₂) is concentrated in the range of 0.1-0.8. The results of Figs. 16A to 16C will be described in further detail as follows. Diffraction peak relating to the (420) crystal face of hydrogarnet appears at θ = 32-33°. Here, where the strength in X-ray diffraction relating to the (420) crystal face of hydrogarnet is denoted "α₁" and the strength in X-ray diffraction relating to the (104) crystal face of calcite is denoted "β₁", looking into the results in which hydrogarnet is produced, the ratio (α₁/β₁) in Fig. 16A is 0.4-1.07, the ratio (α₁/β₁) in Fig. 16B is 0.1-2.29, and the ratio (α₁/β₁) in Fig. 16C is 3.1-9.2. As a whole, the ratio (α₁/β₁) is within the range of 0.1-9.2; particularly the ratio (α₁/β₁) is concentrated in the range of 0.4-1.1.

### (Example 10: Conversion into hydrocalumite under Optimum conditions)

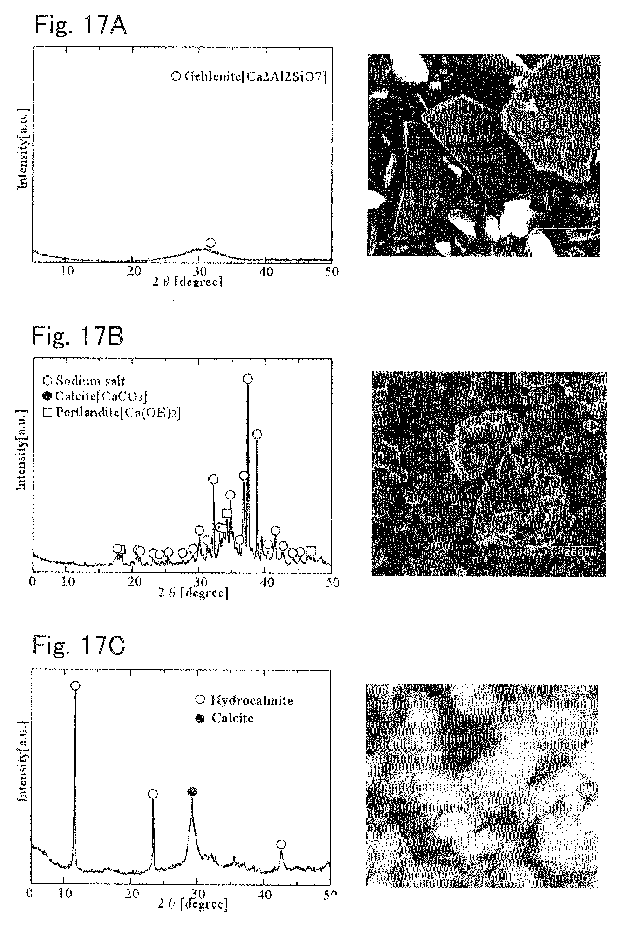

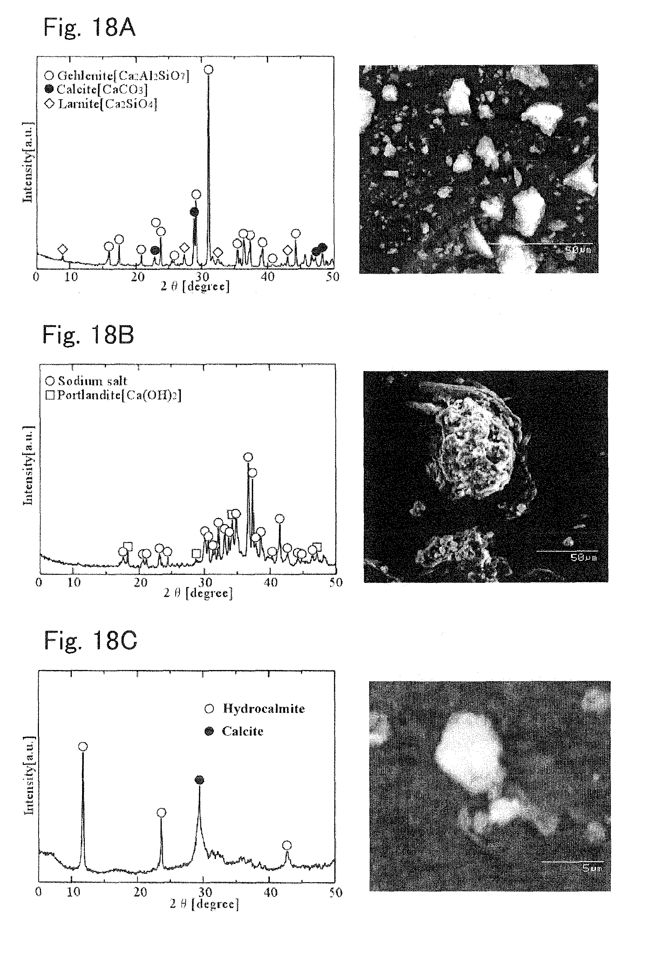

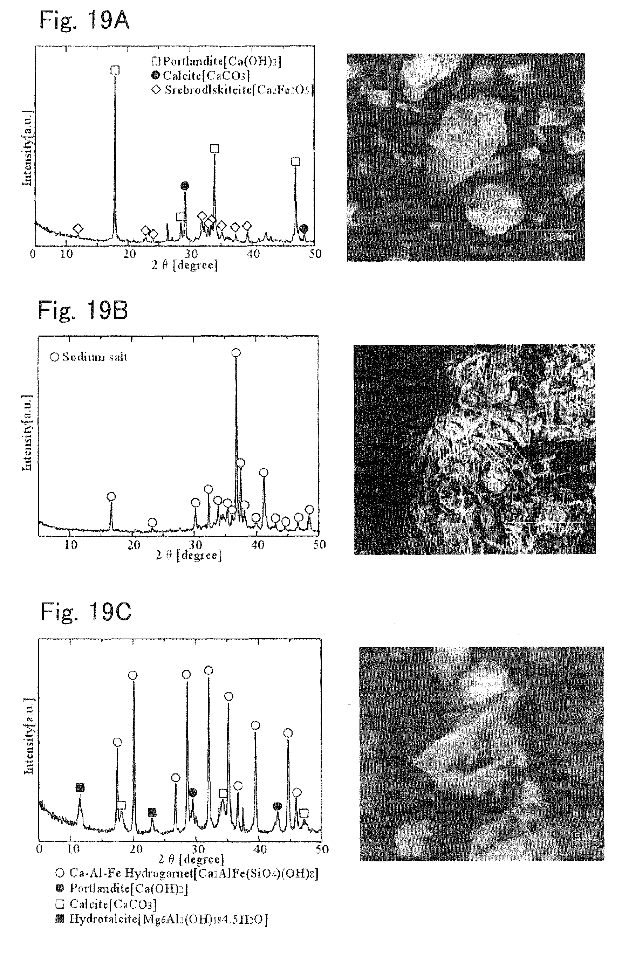

A granulated slag, a slowly-cooled slag, and a converter slag were respectively pulverized down to 1 mm or less by pulverizer. To 10g of the powder thus obtained, 16g of sodium hydroxide was added; then, the powder and sodium hydroxide were pulverized and mixed. The obtained mixture was charged in a crucible made of nickel and then melted with heating at 600 °C for 6 hours by electric furnace. The molten chips after melting were added to 80 mL distilled water and then stirred at 700 rpm at room temperature for 24 hours. Untreated slags, molten chips, and each of the products was respectively analyzed by XRD and those surfaces were observed by SEM. The results are shown in Figs. 17A to 17C, Figs. 18A to 18C, and Figs. 19A to 19C. Figs. 17A to 17C show the results for granulated slag, Figs. 18A to 18C show the results for slowly-cooled slag, and Figs. 19A to 19C show the results for converter slag. Figs. 17A, 18A, and 19A show the results for untreated slags; Figs. 17B, 18B, and 19B show the results for molten chips; and Figs. 17C, 18C, and 19C show the results for each of the products after 24-hour stirring. As seen from these figures, although all the slags respectively have different mineral composition and shape, these became readily-soluble sodium salt by melting; and then, eventually hexagonal hydrocalumite was produced from granulated slag and slowly-cooled slag, and hydrogarnet was produced from converter slag. All the hydrocomposites thus produced have favorable crystallinity.

The results of Fig. 17C will be described in detail as follows. Diffraction peak relating to the (102) crystal face of hydrocalumite appears at θ = 11-12° and a diffraction peak relating to the (104) crystal face of calcite appears at θ = 29-30°. Here, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) is 2.14. The results of Fig. 18C will be described in detail as follows. A diffraction peak relating to the (102) crystal face of hydrocalumite appears at θ = 11-12° and a diffraction peak relating to the (104) crystal face of calcite appears at θ = 29-30'. Here, where the strength in X-ray diffraction relating to the (102) crystal face of hydrocalumite is denoted "α₂" and the strength in X-ray diffraction relating to the (104) crystal face of calcite is denoted "β₂", the ratio (α₂/β₂) is 1.83. The results of Fig. 19C will be described in further detail as follows. A diffraction peak relating to the (420) crystal face of hydrogarnet appears at θ = 32-33° and a diffraction peak relating to the (104) crystal face of calcite appears at θ = 29-30°. Here, where the strength in X-ray diffraction relating to the (420) crystal face of hydrogarnet is denoted "α₁" and the strength in X-ray diffraction relating to the (104) crystal face of calcite is denoted "β₁", the ratio (α₁/β₁) is 0.31.

As described above, with the production method of the present invention, it is possible to convert the iron and steel slag into valuable hydrocomposites. Hereinafter, an example of performance and applications of the hydrocomposites of the invention will be described.

### (Example 11: Comparison of Anion adsorption performance between the raw material and the products)

Performance of iron and steel slag and hydrocomposites of the present invention obtained from the iron and steel slag was evaluated. Specifically, an adsorption test of a predetermined anion was carried out with various iron and steel slags used as the raw material and the hydrocalumites (products) obtained from the iron and steel slag; then, the performance was evaluated. The hydrocalumites used in the adsorption test were the ones obtained in the same manner as Example 10. In other words, comparison between a granulated slag and a hydrocalumite obtained from the granulated slag and comparison between a slowly-cooled slag and a hydrocalumite obtained from the slowly-cooled slag were carried out.

The evaluation test was carried out in accordance with the following procedures. That is, 0.lg of samples for adsorption test were prepared; then, 10 mL of 1 mM anionic solution was added to each of the prepared samples and shaken for 12 hours; finally, anionic adsorption performance of each mixture was evaluated.

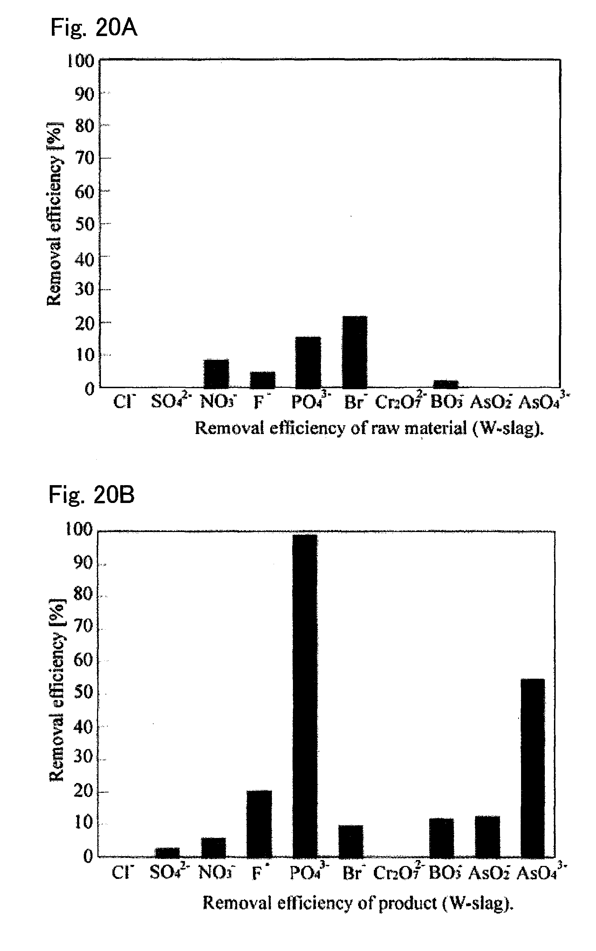

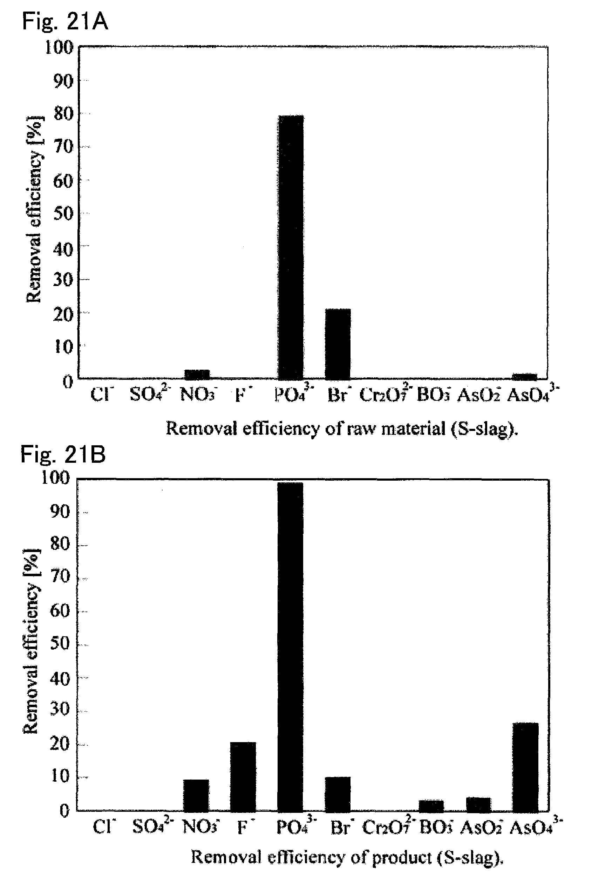

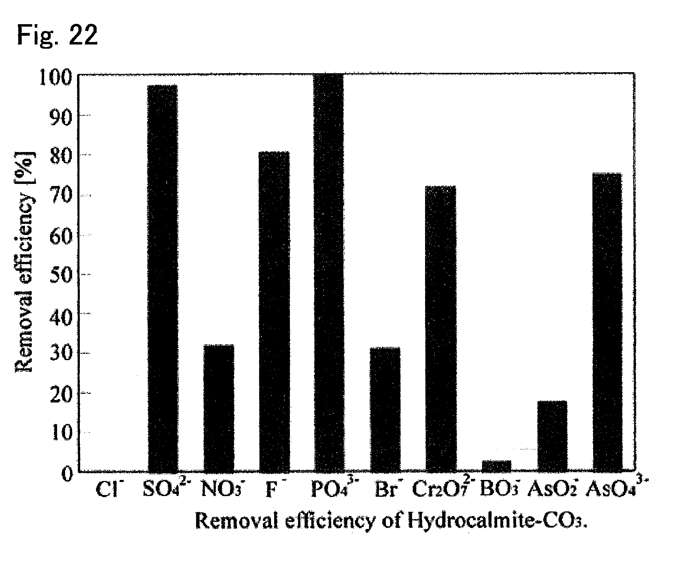

The results of anionic adsorption performance are shown in Figs. 20A, 20B and Figs. 21A, 21B. As a reference, anionic adsorption performance when using test reagent of hydrocalumite is shown in Fig.22. Figs. 20A, 21A show the results for iron and steel slag as it is (as a raw material) and Figs. 20B, 21B show the results for the obtained hydrocalumite (as the product).

As shown in Figs. 20A, 20B and Figs. 21A, 21B, when converting the iron and steel slag into hydrocalumite by using the production method of the invention, it is found out that the absorption performance of hydrocalumite becomes closer to the absorption performance of the reagent of hydrocalumite. Specifically, it is observed that the products obtained from iron and steel slag particularly selectively improve the performance of absorbing phosphate ion. In other words, with this invention, iron and steel slag which has not been used as anion adsorbent conventionally can be converted into hydrocomposites capable of absorbing various anions; thereby the hydrocomposites can be applicable in various industries as absorbent in chemical plants and detergent for treatment equipment for exhaust gas and drainage water. Particularly, it is thought that the hydrocomposites can be suitably used for, for example, detergent for water particularly effectively working on water pollution attributed to phosphate ion.

Zeolite and hydrogarnet both obtained from iron and steel slag are much the same. Zeolite can be used for, for example, detergent for water and soil conditioner; hydrogarnet can be used for, for example, immobilizing material for hydrochloric gas.

The above has described the present invention associated with the most practical and preferred embodiments thereof. However, the invention is not limited to the embodiments disclosed in the specification. Thus, the invention can be appropriately varied as long as the variation is not contrary to the subject substance and conception of the invention which can be read out from the claims and the whole contents of the specification. It should be understood that a method for producing the hydrocomposites with such an alternation are included in the technical scope of the invention.

### Industrial Applicability

By the present invention, it is possible to produce hydrocomposites such as zeolite and hydrogarnet from iron and steel slag without adding other components and requiring complex treatment process. Therefore, the method is useful for the new application of iron and steel slag and is useful as the new processing method. In addition, by recycling of the whole slag, zero emissions can be achieved thereby it is possible to contribute to a recycling-intensive society.

## Claims

1. A hydrocomposite produced from an iron and steel slag, which comprises hydrogarnet and calcite,
wherein a ratio (α₁/β₁) of the strength in X-ray diffraction (α₁) of the (420) crystal face of the hydrogarnet to the strength in X-ray diffraction (β₁) of the (104) crystal face of the calcite respectively obtained by X-ray diffraction measurement is 0.05-200.

2. The hydrocomposite according to claim 1, wherein the ratio (α₁/β₁) is 0.05-10.

3. A hydrocomposite produced from an iron and steel slag, which comprises hydrocalumite and calcite,
wherein a ratio (α₂/β₂) of the strength in X-ray diffraction (α₂) of the (102) crystal face of the hydrocalumite to the strength in X-ray diffraction (β₂) of the (104) crystal face of the calcite espectively obtained by X-ray diffraction measurement is 0.05-200.

4. The hydrocomposite according to claim 3, wherein the ratio (α₂/β₂) is 0.05-10.

5. A hydrocomposite produced from an iron and steel slag, which at least comprises: zeolite X, zeolite A, calcite, and hydroxysodalite.

6. The hydrocomposite according to claim 5, wherein a ratio (α₃/β₃) of the strength in X-ray diffraction (α₃) of the (111) crystal face of the zeolite X to the strength in X-ray diffraction (β₃) of the (104) crystal face of the calcite; a ratio (α₄/β₃) of the strength in X-ray diffraction (α₄) of the (200) crystal face of the zeolite A to the strength in X-ray diffraction (β₃) of the (104) crystal face of the calcite; or a ratio (α₅/β₃) of the strength in X-ray diffraction (α₅) of the (211) crystal face of the hydroxysodalite to the strength in X-ray diffraction (β₃) of the (104) crystal face of the calcite, respectively obtained by X-ray diffraction measurement, is 0.5-200.

7. The hydrocomposite according to claim 6, wherein the ratio (α₃/β₃, α₄/β₃. or α₅/β₃) is 0.5-1.

8. The hydrocomposite according to any one of claims 1 to 7, which is produced from the entirety of the components contained in the iron and steel slag.

9. A method for producing a hydrocomposite, which comprises:
a mixture producing step of adding solid base to an iron and steel slag-containing starting material and mixing them to produce a mixture;
a molten chips producing step of melting the mixture obtained in the mixture producing step at a temperature within the range of 100-1000 °C to produce molten chips;
a hydrocomposite producing step of adding the molten chips obtained in the molten chips producing step to a solvent to produce a solution and then producing a hydrocomposite from the solution.

10. The method for producing a hydrocomposite according to claim 9, wherein the starting material contains 20-80 mass % of calcium component equivalent to CaO.

11. The method for producing a hydrocomposite according to claim 9 or 10, wherein 40-200 parts by mass of the solid base is added to and mixed with 100 parts by mass of the starting material in the mixture producing step.

12. The method for producing a hydrocomposite according to any one of claims 9 to 11, wherein the solid base is an alkali metal hydroxide or an alkali metal carbonate.

13. The method for producing a hydrocomposite according to any one of claims 9 to 12, wherein the solution is aged for 3 hours or more in the hydrocomposite producing step to obtain hydrocalumite.

14. The method for producing a hydrocomposite according to any one of claims 9 to 12, wherein the solution is heated at a temperature within the range of 80-200 °C in the hydrocomposite producing step to obtain hydrogarnet.

15. The method for producing a hydrocomposite according to any one of claims 9 to 12, wherein a chelator is added to the solution and then the mixture is heated at a temperature within the range of 20-200 °C in the hydrocomposite producing step to obtain zeolite.

16. The method for producing hydrocomposite according to claim 15, wherein the chelator is ethylenediamine tetraacetate.
